# EUROPÄISCHE PATENTSCHRIFT

(11) **EP 0 776 803 B1**
(45) Veröffentlichungstag und Bekanntmachung des Hinweises auf die Patenterteilung: **22.03.2000**
(21) Anmeldenummer: 96117920.7
(22) Anmeldetag: 08.11.1996
(51) Int. Cl.: B60S 1/24

(54) **Getriebe, insbesondere einer Fahrzeugscheibenwischeranlage**
Transmission, in particular for a vehicle windscreen wiper assembly
Transmission, notamment pour un dispositif d'essuie-glace de véhicule automobile

(30) Priorität: 29.11.1995 DE 19544478
(43) Veröffentlichungstag der Anmeldung: 04.06.1997
(73) Patentinhaber: ITT Automotive Europe GmbH, 60488 Frankfurt am Main (DE)
(72) Erfinder: Edele, Reinhard, 74321 Bietigheim-Bissingen (DE); Krizek, Oldrich, 74321 Bietigheim-Bissingen (DE); Schmid, Eckhardt, 74336 Brackenheim (DE)
(74) Vertreter: Dreiss, Fuhlendorf, Steimle & Becker

(56) Entgegenhaltungen:
- EP-A- 0 207 364
- EP-A- 0 505 255
- DE-A- 2 406 506
- FR-A- 1 603 037
- GB-A- 2 088 707
- GB-A- 2 151 915
- US-A- 3 845 998

## Beschreibung

Die Erfindung betrifft ein Getriebe mit den Merkmalen des Oberbegriffs des Anspruchs 1.

Die Kurbelschwinge ist bei einem derartigen Getriebe drehfest auf einer aus Metall hergestellten Welle oder Achse befestigt. Bezogen auf eine Fahrzeugscheibenwischeranlage kann die Welle eine Wischerwelle oder die Abtriebswelle eines Scheibenwischer-Motors oder eine drehbar gelagerte Achse eines Zwischenlagers sein. Die Gelenkstange ist dazu bestimmt, zwei Kurbelschwingen einer derartigen Scheibenwischeranlage funktional miteinander zu verbinden und entsprechende Bewegungen zum Antrieb der Scheibenwischer zu übertragen.

Bei modernen Fahrzeugscheibenwischeranlagen, mit denen relativ große Sichtflächen von Fahrzeugscheiben zu reinigen sind, müssen sehr große Kräfte vom Scheibenwischermotor über ein geeignetes Kurbelgetriebe auf die Wischerwellen und von da auf die Wischerhebel übertragen werden. Dazu ist eine äußerst stabile, drehfeste Befestigung der erforderlichen Kurbelschwingen an den betreffenden Wellen bzw. Achsen erforderlich. Andererseits besteht derzeit eine permanente Aufgabe darin, daß derartige Scheibenwischeranlagen ein möglichst geringes Gewicht haben und möglichst einfach und kostengünstig herstellbar sein sollen. Zur Gewichtseinsparung ist die Verwendung von Kunststoff als Herstellungsmaterial von Teilen einer Fahrzeugscheibenwischeranlage bereits bekannt. Andererseits scheint es unumgänglich zu sein, bestimmte Bauteile wegen der geforderten Festigkeit bzw. Stabilität bzw. im Sinne eines verschleißarmen Betriebes einer solchen Scheibenwischeranlage als Metallteile auszuführen. Deshalb ist es noch immer allgemein üblich, Wellen und Achsen einer Fahrzeugscheibenwischeranlage aus Metall herzustellen.

Aus der DE-A-24 06 506 ist ein Getriebe, insbesondere einer Fahrzeugscheibenwischeranlage, bekannt geworden, bei welchem eine aus Kunststoffmaterial gepreßte Lagerschwinge drehfest auf dem einen Ende einer Welle bzw. Achse befestigt ist. Für die Befestigung auf dem Wellenende bzw. Achsenende besitzt die Kurbelschwinge eine zylindrische Ausnehmung, deren Mündung zur Welle hin derart verengt ist, daß diese eine Art Rastvorrichtung bildet. Unter Ausnutzung der elastischen Verformbarkeit der Kurbelschwinge ist diese in axialer Richtung der zylindrischen Ausnehmung auf das Ende der Welle aufgepreßt, bis unter vorübergehender elastischer Verformung die verengte Mündung der zylindrischen Ausnehmung in eine Umfangsnut der Welle einrastet und somit die Kurbelschwinge auf dem Wellenende fixiert. Eine längsgerichtete Riffelung an dem Ende der Welle, welches von der zylindrischen Ausnehmung der Kurbelschwinge aufgenommen wird, soll hierbei für eine Verdrehsicherung der Kurbelschwinge gegenüber der Welle sorgen. Nachteilig an dieser Art der Befestigung der Kurbelschwinge auf der Welle bzw. Achse ist, daß bei Übertragung großer Drehmomente diese Verdrehsicherung nicht ausreicht und die Gefahr besteht, daß die Kurbelschwinge relativ zur Welle bzw. Achse verdrehbar ist. Dadurch wird die Funktion der Scheibenwischeranlage beeinträchtigt, was eine große Gefahr darstellt.

Aus der FR-A-1 603 037 ist ein Getriebe einer Fahrzeugscheibenwischeranlage bekannt, bei welchem eine Gelenkstange über eine Gelenkverbindung mit einer aus Kunststoffmaterial hergestellten Kurbelschwinge verbunden ist, welche wiederum durch Angießen drehfest auf einer aus Metall hergestellten Welle oder Achse befestigt ist.

Ausgehend von der FR-A-1 603 037 liegt der Erfindung die Aufgabe zugrunde, ein Getriebe der eingangs beschriebenen Art dahingehend zu verbessern, daß ohne wesentliche Vergrößerung des Fertigungsaufwandes eine auch bei Einleitung großer Drehmomente ausreichend stabile Verdrehsicherung der Kurbelschwinge gegenüber der Welle bzw. Achse zu gewährleistet ist und eine relativ kompakte Baueinheit entsteht.

Erfindungsgemäß wird die Aufgabe durch ein Getriebe mit den Merkmalen des Anspruchs 1 gelöst.

Dadurch, daß die aus Kunststoff gefertigte Kurbelschwinge direkt durch Angießen, vorzugsweise im Spritzgießverfahren, drehfest auf der Welle oder Achse befestigt ist, ist einerseits eine äußerst rationelle und kostengünstige Herstellbarkeit gegeben, und andererseits ist es möglich, die Verbindung zwischen der Kurbelschwinge und der betreffenden Welle bzw. Achse mit einer ausreichenden Festigkeit, insbesondere Verdrehfestigkeit, auszuführen.

Die erfindungsgemäße Ausgestaltung ist auf derartige Fahrzeugscheibenwischeranlagen gerichtet, bei denen die Wischerwelle hohl ausgeführt ist und eine Waschflüssigkeitsleitung durch die Durchgangsbohrung der Wischerwelle hindurchgeführt ist. Für diesen Fall ist die Kurbelschwinge an das Ende einer durchbohrten Wischerwelle angegossen und einstückig mit der Kurbelschwinge ist eine Waschflüssigkeitsleitung in Form eines relativ formstabilen Röhrchens gefertigt, welches die Bohrung der Wischerwelle durchsetzt.

Bei einer Weiterbildung ist vorgesehen, daß die Waschflüssigkeitsleitung an beiden Enden aus der Wischerwelle hervorsteht und mit entsprechenden Anschlüssen für eine flexible Schlauchleitung oder eine Spritzdüsenvorrichtung oder dergleichen versehen ist. In Abhängigkeit von den Platzverhältnissen des Fahrzeuges am Anbauort der Scheibenwischeranlage kann es dabei von Vorteil sein, wenn an dem Ende der Wischerwelle, an welchem die Kurbelschwinge angegossen ist, ein Schlauchanschlußstutzen vorgesehen ist, der vorzugsweise rechtwinklig und in Richtung der Kurbelschwinge von der einstückig mit der Kurbelschwinge gefertigten Waschflüssigkeitsleitung absteht.

Vorteilhafte Ausgestaltungen der Erfindung sind in den Unteransprüchen angegeben. Als vorteilhaft wird eine Ausgestaltung gemäß Anspruch 4 empfohlen, weil damit eine noch größere Stabilität der Verbindung zwischen der Kurbelschwinge und der betreffenden Welle oder Achse erreichbar ist. Wenn dabei außerdem die Welle oder Achse im Angießbereich der Kurbelschwinge mit Mitteln in Form von Riffelungen, Verzahnungen, Nuten oder dergleichen versehen ist, welche von dem Material der Kurbelschwinge ausgefüllt bzw. eingeschlossen sind, ist eine noch innigere und stabilere Verbindung zwischen Kurbelschwinge und Achse bzw. Welle erreichbar. Weiterhin kann eine Ausgestaltung gemäß Anspruch 6 empfohlen werden, wonach ein Gelenkverbindungsteil in Form einer zylindrischen Buchse zur Aufnahme eines an der Gelenkstange befestigen zylindrischen Gelenkzapfens oder in Form einer Kugelpfanne zur Aufnahme eines an der Gelenkstange befestigten kugeligen Gelenkzapfens einstückig mit der Kurbelschwinge hergestellt ist. Damit wird gleichzeitig die Möglichkeit für eine weitere vorteilhafte Ausgestaltung gemäß Anspruch 7 geschaffen, wonach im Zusammenhang mit der Herstellung der Kurbelschwinge der an der Gelenkstange befestigte zylindrische oder kugelige Gelenkzapfen in Form der entsprechenden zylindrischen Buchse bzw. Kugelpfanne umgossen wird. Somit wird also gleichzeitig mit der Herstellung und dem Angießen der Kurbelschwinge an die betreffende Welle oder Achse ebenfalls die Verbindung mit der Gelenkstange hergestellt.

Zur Vermeidung des Eindringens von Schmutz oder aggressiven Medien in die Gelenkverbindung zwischen der Kugelschwinge und der Gelenkstange wird empfohlen, gemäß Anspruch 8 die zylindrische Buchse bzw. Kugelpfanne an der Kurbelschwinge einseitig hutartig geschlossen auszubilden. Für eine material- und gewichtssparende Herstellung der Gelenkstange wird eine Ausgestaltung gemäß Anspruch 9 bevorzugt, wonach die Gelenkstange aus Blech gefertigt ist und der zylindrische oder der kugelige Gelenkzapfen durch Tiefziehen und ggf. nachfolgendes Rollieren einstückig mit der Gelenkstange hergestellt ist.

Anhand von Ausführungsbeispielen wird die Erfindung nachfolgend näher beschrieben. In den zugehörigen Zeichnungen zeigen:
- Fig. 1: einen Teil eines herkömmlichen Getriebes einer Fahrzeugscheibenwischeranlage, wobei die Kurbelschwinge im Längsschnitt dargestellt ist; und
- Fig. 2: in Schnittdarstellung eine durchbohrte Wischerwelle mit Kurbelschwinge und Waschflüssigkeitsleitung durch die Wischerwelle hindurch.

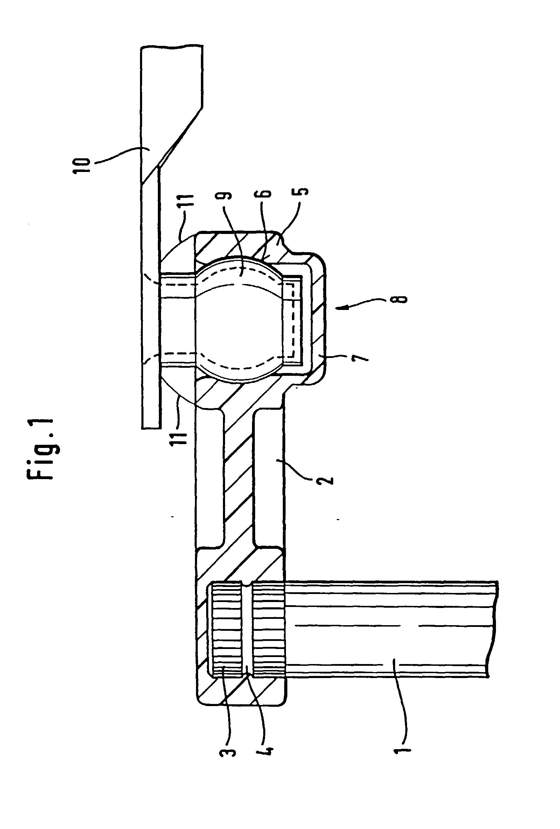

Die in Fig. 1 dargestellte, aus Stahl gefertigte Welle 1 eines Getriebes, welches nicht in den Schutzbereich des Patents fällt, kann beispielsweise die Abtriebswelle eines nicht dargestellten Scheibenwischermotors oder auch eine Wischerwelle sein. Das eine Ende dieser Welle 1 ist zur drehfesten Befestigung einer Kurbelschwinge 2 ausgebildet. Der Endabschnitt der Welle 1 ist mit einer längsgerichteten Riffelung 3 versehen, und etwa mittig im Bereich der Riffelung 3 ist eine Umfangsnut 4 in die Welle 1 eingearbeitet. Die Kurbelschwinge 2 ist durch Gießen, insbesondere durch Spritzgießen, aus einem geeigneten Kunststoffmaterial hergestellt. Gleichzeitig mit der Herstellung der Kurbelschwinge 2 ist diese durch Angießen an das Ende der Welle 1 stabil und drehfest mit dieser verbunden worden. Die Verfahrensweise, nach welcher ein vorgefertigtes Teil in einen entsprechenden Formhohlraum eingelegt und dann ein zweites Teil an das erste Teil angegossen wird, ist allgemein bekannt und muß an dieser Stelle nicht näher erläutert werden.

In Fig. 1 ist weiterhin zu erkennen, daß am freien Ende der Kurbelschwinge 2 einstückig mit dieser als Gelenkverbindungsteil 5 eine Kugelpfanne 6 hergestellt ist, die natürlich auch als Doppelkugelpfanne ausgebildet sein kann. An der unteren Seite der Kurbelschwinge 2 ist der Hohlraum der Kugelpfanne 6 durch ein angeformtes hutartiges Gebilde 7 abgeschlossen, so daß von dieser Seite her weder Schmutz noch aggressive Medien oder dergleichen in die Gelenkverbindung 8 eindringen kann.

Zu der Gelenkverbindung 8 gehört weiterhin ein kugeliger Gelenkzapfen 9, der unter vorübergehender elastischer Verformung der Kugelpfanne 6 in axialer Richtung in diese eingepreßt worden ist. Der Kugelzapfen 9 selbst ist Bestandteil einer aus Blech hergestellten Gelenkstange 10, mit welcher er einstückig hergestellt ist. Es ist zu erkennen, daß der kugelige Gelenkzapfen 9 in material- und gewichtssparender Weise hohl ausgebildet ist. Er ist durch Tiefziehen eines hohlzylindrischen Domes und anschließendes Rollieren des kugeligen Abschnittes hergestellt worden. Die bogenförmigen Linien 11 zwischen der Gelenkstange 10 und der Kugelpfanne 6 sollen andeuten, daß dieser Abschnitt der Gelenkverbindung 8 in herkömmlicher Weise durch eine nicht näher dargestellte elastische Dichtmanschette abgedichtet ist.

Der Abschnitt der Kurbelschwinge 2, welcher sich zwischen der Kugelpfanne 6 und der Befestigung auf dem Ende der Welle 1 erstreckt, ist in kunststoffgerechter Art und Weise einerseits materialsparend und andererseits möglichst stabil ausgeführt. Dieser Abschnitt besitzt einen H-förmigen Querschnitt, wobei insbesondere die Seitenwände für die erforderliche Stabilität und Steifigkeit der Kurbelschwinge 2 sorgen. Eine besonders feste Verbindung zwischen der Kurbelschwinge 2 und dem Ende der Welle 1 ist dadurch erreicht, daß einerseits der Umfang und die Stirnseite der Welle 1 vom Material der Kurbelschwinge 2 umschlossen sind, und daß andererseits das Material der Kurbelschwinge 2 beim Angießen an die Welle 1 in die Vertiefungen der Riffelung 3 und der Umfangsnut 4 eingedrungen ist und somit eine äußerst innige Verbindung hergestellt ist.

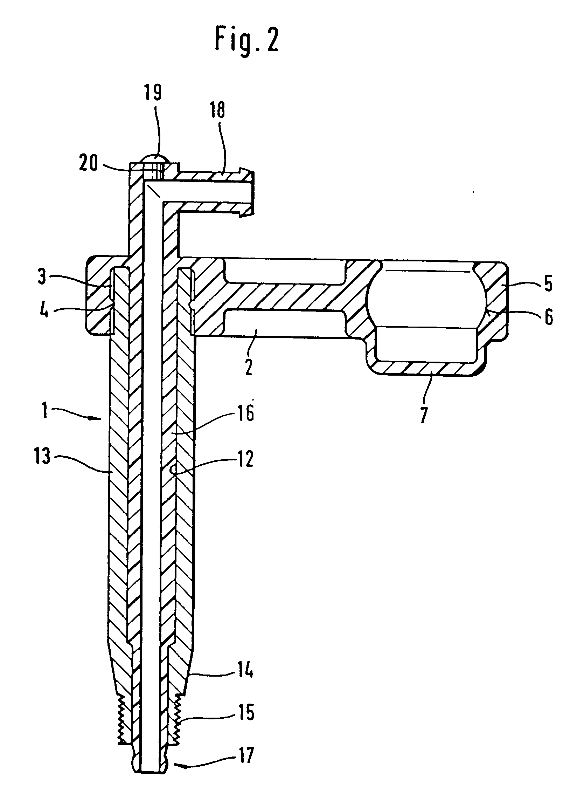

Bei dem in Fig. 2 dargestellten Ausführungsbeispiel ist eine aus Stahl gefertigte und mit einer Durchgangsbohrung 12 versehene Welle 1 zu erkennen, welche als Wischerwelle 13 ausgebildet ist. Das untere Ende der Wischerwelle 13 ist für die Befestigung eines Wischerhebels ausgebildet. Dementsprechend ist ein konischer Befestigungsabschnitt 14 zu erkennen, an den sich ein Gewindezapfen 15 anschließt. Am oberen Ende der Wischerwelle 13 ist wiederum durch Angießen eine Kurbelschwinge 2 befestigt, welche aus einem geeigneten Kunststoffmaterial hergestellt ist. Dabei ist die Kurbelschwinge 2 so an das obere Ende der Wischerwelle 13 angegossen, daß der Umfang der Wischerwelle 13 und die obere Stirnseite von der Kurbelschwinge 2 umschlossen ist. Wie beim Ausführungsbeispiel gemäß Fig. 1 ist auch bei diesem Ausführungsbeispiel dieses Ende der Welle 1 mit einer Riffelung 3 und einer Umfangsnut 4 ausgestattet, um eine besonders feste Verbindung zwischen der Kurbelschwinge 2 und der Welle 1 zu gewährleisten. Am freien Ende der Kurbelschwinge 2 ist wiederum als einstückig mit der Kurbelschwinge 2 gefertigtes Gelenkverbindungsteil 5, die an der Unterseite mittels einem hutartigen Gebilde 7 verschlossene Kugelpfanne 6 zu sehen.

Die Besonderheit dieses Ausführungsbeispieles gemäß Fig. 2 besteht darin, daß einstückig mit der Kurbelschwinge 2 eine Waschflüssigkeitsleitung in Form eines relativ formstabilen Röhrchens 16 gefertigt ist, welches in der Durchgangsbohrung 12 der Wischerwelle 13 angeordnet ist und diese durchdringt. Das Röhrchen 16 ragt an dem Ende der Wischerwelle 13, welches für die Befestigung eines Wischerhebels ausgebildet ist, ein relativ kurzes Stück aus der Wischerwelle 13 heraus. Dieses herausragende Stück des Röhrchens 16 ist als kalottenförmiger Anschlußstutzen 17 ausgebildet. Auf diesen Anschlußstutzen 17 ist eine Spritzdüsenvorrichtung aufrastbar, welche die geförderte Waschflüssigkeit auf die zu wischende Scheibe spritzt. Am Wischerhebel ist eine entsprechende Öffnung vorzusehen, durch welche die Spritzdüse hindurchragt bzw. durch welche der Spritzstrahl hindurchtreten kann.

Am oberen Ende der Wischerwelle 13, an dem die Kurbelschwinge 2 befestigt ist, ist ein Schlauchanschlußstutzen 18 vorgesehen, auf den ein flexibler Schlauch aufsteckbar ist, der mit einer entsprechenden Waschpumpe verbindbar ist. Es ist zu erkennen, daß der Schlauchanschlußstutzen 18 rechtwinklig und in Richtung der Kurbelschwinge 2 von dem aus dem oberen Ende der Wischerwelle 13 herausragenden Stück des Röhrchens 16 absteht. Dieses ist aus Platzgründen am Einbauort der Scheibenwischeranlage erforderlich. Ein Verschlußstopfen 19 verschließt die obere axiale Öffnung 20 des Röhrchens 16. Diese für die Funktion der Scheibenwaschanlage nicht erforderliche Öffnung 20 ist herstellungsbedingt.

## Patentansprüche

1. Getriebe, insbesondere einer Fahrzeugscheibenwischeranlage, bei welchem eine Gelenkstange (10) über eine Gelenkverbin-dung (8) mit einer aus Kunststoffmaterial hergestellten Kurbelschwinge (2) verbunden ist, welche wiederum drehfest auf einer aus Metall hergestellten Welle (1) oder Achse befestigt ist, wobei die Kurbelschwinge (2) durch Angießen, vorzugsweise im Spritzgießverfahren, drehfest auf der Welle (1) oder Achse befestigt ist, dadurch gekennzeichnet, daß die Kurbelschwinge (2) an das Ende einer durchbohrten Wischerwelle (13) angegossen ist und daß einstückig mit der Kurbelschwinge (2) eine die Bohrung (12) der Wischerwelle (13) durchsetzende Waschflüssigkeitsleitung in Form eines relativ formstabilen Röhrchens (16) gefertigt ist.

2. Getriebe nach Anspruch 1, dadurch gekennzeichnet, daß das Röhrchen (16) an beiden Enden aus der Wischerwelle (13) hervorsteht und mit entsprechenden Anschlüssen für eine Spritzdüsenvorrichtung oder eine flexible Schlauchleitung versehen ist.

3. Getriebe nach Anspruch 2, dadurch gekennzeichnet, daß an dem Ende der Wischerwelle (13), an welchem die Kurbelschwinge (2) angegossen ist, ein Schlauchanschlußstutzen (18) von dem Röhrchen (16) absteht, der vorzugsweise rechtwinklig von dem Röhrchen (16) und in Richtung der Kurbelschwinge (2) ausgerichtet ist.

4. Getriebe nach einem der vorhergehenden Ansprüche, wobei die Kurbelschwinge (2) an ein aus einem Lager herausragendes Ende der Welle (1) oder Achse angegossen ist, dadurch gekennzeichnet, daß der angegossene Teil der Kurbelschwinge (2) das betreffende Ende der Welle (1) oder Achse am Umfang und an der Stirnseite umschließt.

5. Getriebe nach einem der vorhergehenden Ansprüche, dadurch gekennzeichnet, daß die Welle (1) oder Achse im Angießbereich der Kurbelschwinge (2) mit Riffelungen (3), Verzahnungen oder Nuten (4) versehen ist, welche von dem Material der Kurbelschwinge (2) ausgefüllt bzw. eingeschlossen sind, um diese stabil auf der Welle (1) oder Achse zu fixieren.

6. Getriebe nach einem der vorhergehenden Ansprüche, dadurch gekennzeichnet, daß ein Gelenkverbindungsteil (5) in Form einer zylindrischen Buchse zur Aufnahme eines an der Gelenkstange (10) befestigten zylindrischen Gelenkzapfens oder in Form einer Kugelpfanne (6) zur Aufnahme eines an der Gelenkstange (10) befestigten kugeligen Gelenkzapfens (9) einstückig mit der Kurbelschwinge (2) hergestellt ist.

7. Getriebe nach Anspruch 6, dadurch gekennzeichnet, daß die zylindrische Buchse bzw. die Kugelpfanne (6) der Kurbelschwinge (2) um den zylindrischen bzw. den kugeligen Gelenkzapfen (9) der Gelenkstange (10) einseitig geschlossen gegossen ist.

8. Getriebe nach Anspruch 6 oder 7, dadurch gekennzeichnet, daß die zylindrische Buchse bzw. Kugelpfanne (6) einseitig hutartig geschlossen ausgebildet ist.

9. Getriebe nach Anspruch 7 oder 8, dadurch gekennzeichnet, daß die Gelenkstange (10) aus Blech gefertigt ist und der zylindrische oder der kugelige Gelenkzapfen (9) durch Tiefziehen und ggf. nachfolgendes Rollieren einstückig mit der Gelenkstange (10) hergestellt ist.

## Claims

1. Transmission, in particular a vehicle windshield washer installation, with which a joint rod (10) is connected, via a link joint (8), to a pivoted link (2) made from a plastic material, the pivoted link (2) being attached in a rotationally secure fashion to a shaft (1) or axle made from metal, wherein the pivoted link (2) is mounted in a rotationally secure fashion onto the shaft (1) or axle by molding, preferentially by injection molding,
characterized in that, the pivoted link (2) is molded onto the end of a wiper shaft (13), the wiper shaft 13 having a bore hole, and a washing liquid conduit in the form of a tube (16) of relatively stable shape is integral with the pivoted link (2) and passes through the bore hole (12) of the wiper shaft (13).

2. Transmission according to claim 1, characterized in that the tube (16) projects past both ends of the wiper shaft (13) and has appropriate connectors for a spray nozzle device or for a flexible hose conduit.

3. Transmission according to claim 2, characterized in that, at that end of the wiper shaft (13) to which the pivoted link (2) is molded, a hose connection piece (18) projects, preferentially at right angles away from the tube (16) in a direction of the pivoted link (2).

4. Transmission according to any one of the preceding claims, wherein the pivoted link (2) is molded onto an end of the shaft (1) or axle projecting past a bearing, characterized in that the molded component of the pivoted link (2) surrounds the girth and the end of the associated end of the shaft (1) or axle.

5. Transmission according to any one of the preceding claims, characterized in that the shaft (1) or axle has ribs (3), teeth or grooves (4) in a region where the pivoted link (2) is molded which are filled up or closed by the material of the pivoted link (2) to stably attach same onto the shaft (1) or axle.

6. Transmission according to any one of the preceding claims, characterized in that a link joint member (5), in the form of a cylindrical bushing for acceptance of a cylindrical link pin attached to the joint rod (10) or in the form of a ball socket (6) for accepting a spherical link pin (9) mounted to the joint rod (10), is produced integral with the pivoted link (2).

7. Transmission of claim 6, characterized in that the cylindrical bushing or the ball socket (6) of the pivoted link (2) is molded about the cylindrical or spherical link pin (9) of the joint rod (10) and is closed at one side thereof.

8. Transmission of claim 6 or 7, characterized in that the cylindrical bushing or ball socket (6) is closed at one side in a hat-shaped manner.

9. Transmission according to claim 7 or 8, characterized in that the joint rod (10) is made from sheet metal and the cylindrical or spherical link pin (9) is manufactured by deep-drawing and optionally subsequent rolled burnishing to be integral with the joint rod (10).

## Revendications

1. Transmission, notamment d'un dispositif d'essuie-glace pour véhicule, dans laquelle une tige articulée (10) est reliée par l'intermédiaire d'un joint à rotule (8) à une manivelle oscillante (2) fabriquée en matière plastique, qui est à son tour fixée, solidairement en rotation, sur un arbre (1) ou un essieu fabriqué en métal, la manivelle oscillante (2) étant fixée, solidairement en rotation, sur l'arbre (1) ou l'essieu par surmoulage, de préférence par moulage par injection, caractérisée en ce que la manivelle oscillante (2) est fixée par surmoulage sur l'extrémité d'un arbre d'essuie-glace (13) traversé par un alésage, et en ce qu'une conduite de liquide de lavage qui traverse l'alésage de l'arbre d'essuie-glace (13) est réalisée, sous la forme d'un petit tube (16) relativement indéformable, d'un seul tenant avec la manivelle oscillante (2).

2. Transmission selon la revendication 1, caractérisée en ce que le petit tube (16) fait saillie sur les deux extrémités de l'arbre d'essuie-glace (13) et est muni de raccords correspondantes pour un dispositif à buses ou une conduite à tuyau flexible.

3. Transmission selon la revendication 2, caractérisée en ce qu'une tubulure de raccord de tuyau flexible (18) fait saillie sur le petit tube (16) à l'extrémité de l'arbre d'essuie-glace (13) sur laquelle est fixée par surmoulage la manivelle oscillante (2), tubulure qui est orientée de préférence perpendiculairement au petit tube (16) et dans le sens de la manivelle oscillante (2).

4. Transmission selon l'une quelconque des revendications précédentes, dans laquelle la manivelle oscillante (2) est fixée par surmoulage sur une extrémité de l'arbre (1) ou de l'essieu qui fait saillie à partir d'un palier, caractérisée en ce que la partie fixée par surmoulage de la manivelle oscillante (2) entoure l'extrémité concernée de l'arbre (1) ou de l'essieu sur la circonférence et sur la face frontale.

5. Transmission selon l'une quelconque des revendications précédentes, caractérisée en ce que l'arbre (1) ou l'essieu est muni dans la section de fixation par surmoulage de la manivelle oscillante (2), de cannelures (3), de dentures ou de rainures (4) qui sont remplies par le matériau de la manivelle oscillante (2) ou encastrées dans celui-ci, afin de fixer la manivelle de façon stable sur l'arbre (1) ou l'essieu.

6. Transmission selon l'une quelconque des revendications précédentes, caractérisée en ce qu'une pièce de joint (5) en forme d'un manchon cylindrique, pour le logement d'un tenon de joint cylindrique qui est fixé sur la tige articulée (10) ou en forme d'une rotule creuse (6) pour le logement d'un tenon de joint sphérique (9) fixé sur la tige articulée (10), est fabriqué d'un seul tenant avec la manivelle oscillante (2).

7. Transmission selon la revendication 6, caractérisée en ce que le manchon cylindrique ou la rotule creuse (6) de la manivelle oscillante (2) est moulé de façon à entourer le tenon de joint (9) cylindrique ou sphérique de la tige articulée (10) et à être fermé(e) sur un côté.

8. Transmission selon la revendication 6 ou 7, caractérisée en ce que le manchon cylindrique ou la rotule creuse (6) est fermé(e) sur un côté à la façon d'un chapeau.

9. Transmission selon la revendication 7 ou 8, caractérisée en ce que la tige articulée (10) est fabriquée en tôle, et en ce que le tenon de joint cylindrique ou sphérique (9) est fabriqué d'un seul tenant avec la tige articulée (10) par emboutissage suivi éventuellement par un roulage.
